# DEMANDE DE BREVET EUROPEEN

(11) **EP 0 717 389 A1**
(43) Date de publication de la demande: **19.06.1996**
(21) Numéro de dépôt: 95402666.2
(22) Date de dépôt: 27.11.1995
(51) Int. Cl.: G09F 3/02, G06K 19/16

(54) **Dispositif inviolable d'identification**

(30) Priorité: 14.12.1994 FR 9415064
(71) Demandeur: PLASTO S.A., F-21300 Chenôve (FR)
(72) Inventeur: Hurier, François, F-21800 Quétigny (FR); Guillemet, Alain, F-21121 Fontaine lès Dijon (FR)
(74) Mandataire: Levy, David

(57) **Abrégé**

La présente invention concerne un dispositif, notamment ayant la forme d'une étiquette, constitué d'une impression à caractère sécuritaire (3) par exemple un hologramme, fixée au moyen d'adhésif (2) entre un film transparent (1) et un film destructible (4) et ledit film destructible étant couvert sur la seconde face d'un adhésif (5) à fort pouvoir adhésif capable de fixer de façon inviolable ledit dispositif sur un objet à sécuriser.
Application à l'authentification des plaques d'identification des automobiles.

## Description

### Domaine de l'invention

La présente invention concerne un dispositif d'identification inviolable, notamment présenté sous forme d'une étiquette, et destiné à éviter le vol ou la falsification des objets sur lesquels il est apposé. En particulier, ce dispositif trouve ses applications dans la sécurisation des moyens d'identification des automobiles, comme par exemple les plaques d'immatriculation et les plaques d'identification du constructeur.

### Art antérieur

De nombreux objets de la vie courante nécessitent le besoin d'identifier soit leur origine, soit leur propriétaire, notamment en raison des problèmes de vol, de falsification ou de contrefaçon. Les méthodes les plus courantes utilisées pour authentifier un objet sont l'attribution d'un numéro ou d'un code comme par exemple sur les cartes bancaires, ou un numéro d'immatriculation, par exemple pour les automobiles. Bien souvent, la reproduction illicite de ces numéros ne pose pas de difficulté et les falsifications deviennent d'autant plus fréquentes que les contrôles ne peuvent pas distinguer de façon évidente un objet authentique d'un objet falsifié. Afin de rendre plus difficiles les reproductions illicites, il est connu d'ajouter sur les petits objets une impression à caractère sécuritaire, comme par exemple une image holographique, au moment de la fabrication : de tels objets comme par exemple les cartes bancaires, sont ainsi beaucoup plus difficiles à reproduire de façon frauduleuse.

Un exemple de cet art antérieur est décrit dans WO 91/18377. Ce document concerne un scellé comprenant un hologramme disposé entre une couche d'adhésif munie d'une protection pelable et une couche support qui est recouverte d'un film transparent. Toutefois, ce scellé est supposé se modifier de façon irréversible en cas de chauffage ou de refroidissement au-dessous de 0°C.

### Objet de l'invention

S'il est possible de fabriquer des cartes bancaires comportant dès leur origine un hologramme, il n'en est pas de même des objets plus volumineux comme par exemple des automobiles qui sont identifiées par leurs plaques constructeur et leurs plaques d'immatriculation. Ces plaques étant fixées de façon amovible sur le véhicule, il est relativement facile d'échanger les plaques originales par des plaques falsifiées qui auront un aspect extérieur en tout point identique. La présente invention a pour but de proposer un dispositif permettant de rendre difficilement falsifiable le moyen d'authentification d'un objet.

La présente invention est telle que définie dans la revendication 1 dont le préambule est constitué par les caractéristiques décrites dans WO 91/18377.

### Description

Le nouveau dispositif se présente sous forme d'une étiquette auto-adhésive, dont la reproduction par photocopie est impossible en raison de la présence d'une impression à caractère sécuritaire, c'est-à-dire très difficile à reproduire ou à imiter, comme par exemple un hologramme, et dont le transfert est impossible également en raison de la structure particulière de cette étiquette qui se détruit si l'on tente de la décoller. Un tel dispositif est destiné en particulier à la sécurisation des plaques d'authentification d'une automobile, c'est à dire les plaques constructeur et les plaques d'immatriculation : la présence de cette étiquette portant un hologramme et un numéro est extrêmement facile à contrôler de l'extérieur du véhicule et la fabrication de fausses plaques d'immatriculation est rendue extrêmement difficile pour qui ne possède pas les dispositifs d'authentification.

Pour réaliser les étiquettes objet de l'invention, on forme un complexe stratifié comprenant successivement :
1) un film transparent 1 légèrement étirable, stable aux intempéries et à la lumière et de bonne résistance mécanique : ce film constitue la protection extérieure et ne doit pas perturber l'identification de l'hologramme. La matière utilisée pour ce film est de préférence une matière plastique de synthèse de haute stabilité comme par exemple du PVDF (fluorure de polyvinyle).
2) une couche adhésive transparente 2 à fort pouvoir adhésif. On utilise de préférence des masses acryliques et de façon pratique, on forme un film adhésif en complexant le film décrit au 1) ci-dessus et une masse acrylique déposée en phase solvant.
3) un élément ou impression à caractère sécuritaire 3 : on utilise de préférence des hologrammes de type 3D ou 2D.3D. présentés sous forme d'auto-adhésifs sous film polyester et munis d'un adhésif sensible à la pression. Les hologrammes présentés sous cette forme seront de préférence conçus de façon à ce que la séparation de la pellicule de protection entraîne la destruction de l'hologramme. On peut également utiliser des hologrammes transférables à chaud.
4) un film en matière destructible 4, non transparent, de couleur uniforme ou non, à faible résistance mécanique, stable à la lumière. On utilise de préférence des films en polystyrène ou en PVC (chlorure de polyvinyle) qui ont la propriété de se fragmenter facilement. Généralement, selon l'invention, ce film reçoit sur une partie l'impression (par jet d'encre ou tout autre dispositif permettant d'imprimer de façon durable) d'un numéro ou d'un code et sur une autre partie l'hologramme d'authentification 3. Il est également possible d'imprimer sur ce film des caractères qui seront lisibles uniquement à l'aide d'un rayonnement infrarouge ou ultraviolet. Certaines parties du film 4 et en particulier la partie du film recouverte par l'hologramme peuvent présenter une prédécoupe, par exemple en forme d'une croix afin d'affaiblir la résistance de ce film.
5) une couche adhésive 5 à très fort pouvoir adhésif. On utilise de préférence une masse acrylique et de façon pratique, pour la fabrication, on forme un film adhésif composé du film destructible décrit ci-dessus 4 sur lequel est déposée de façon classique par enduction, une couche d'adhésif acrylique en phase solvant. Cette couche adhésive peut également être thermoadhésive, ce qui nécessite une thermoactivation provoquant une réticulation au moment de la pose sur l'objet à sécuriser.
6) un protecteur 6, généralement en papier siliconé qui protège la couche adhésive et que l'on retire juste avant la mise en place sur l'objet à sécuriser.

D'autres avantages et caractéristiques ressortiront mieux à la lecture d'un mode de réalisation préféré de l'invention, ainsi que des dessins annexés sur lesquels :
- la figure 1 est une coupe schématique du dispositif selon l'invention ;
- la figure 2 est une vue en plan d'une étiquette auto-adhésive obtenue selon l'invention ;
- la figure 3 est une vue en plan schématique et partielle d'une plaque d'immatriculation munie d'une étiquette auto-adhésive obtenue selon l'invention.

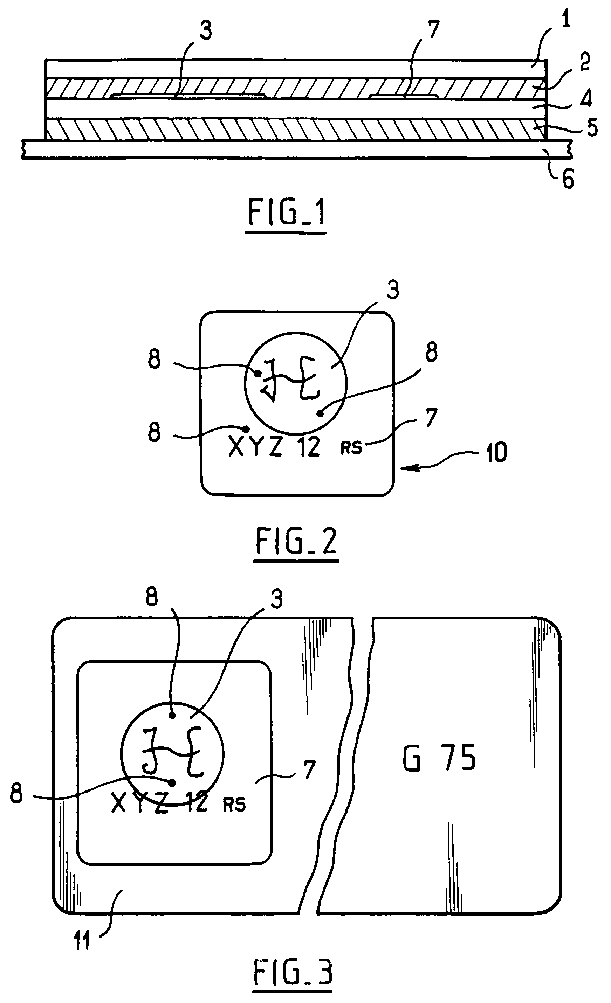

La figure 1 représente une coupe sur laquelle on distingue les différentes couches décrites ci-dessus : le protecteur siliconé 6, la couche d'adhésif sensible à la pression 5, le film destructible 4, l'image holographique 3 et les caractères imprimés 7, la couche adhésive 2 et le film extérieur 1.

De façon pratique, pour fabriquer un tel dispositif, on utilise un film destructible 4 sur lequel on a préalablement déposé, par exemple par enduction, un enduit adhésif 5 et placé le protecteur 6 ; un hologramme 3 est fixé sur au moins la face visible 4a du film destructible, la fixation pouvant être obtenue notamment par adhésif ou par transfert thermique. On imprime sur la face visible 4a du film destructible 4, un numéro, code, graphisme ou sigle 7 qui peut être prévu à proximité de l'hologramme 3 ou superposé en partie sur ce dernier. Enfin on recouvre l'ensemble avec le film 1 comportant la couche d'adhésif sensible à la pression 2 préalablement enduite. Le caractère sécuritaire du dispositif peut être augmenté sensiblement en reliant ponctuellement l'hologramme 3 et le film destructible 4 par des points 8 de colle cyanoacrylate, avant de recouvrir l'ensemble avec le film 1 adhésivé avec la couche adhésive 2 : on forme ainsi des points de scellement qui rendront impossible la séparation du film de protection et des caractères sécuritaires. Lorsque l'hologramme est présenté entre un film polyester et un adhésif, il est également possible d'effectuer un traitement du film polyester, comme par exemple un traitement corona, afin d'assurer une liaison plus forte entre le film extérieur et le film polyester. Les dispositifs en forme d'étiquette 10 sont ensuite découpés de façon à ce que l'hologramme soit sensiblement centré sur une surface 2 à 3 fois supérieure à la surface de l'hologramme. De préférence, le dispositif peut avoir une forme rectangulaire ou carrée avec les coins arrondis et sera de taille adaptée à un emplacement prévu pour le recevoir sur l'objet à sécuriser.

La figure 2 représente un exemple de dispositif en forme d'étiquette 10 selon l'invention.

L'exemple de réalisation ci-après décrit la fabrication d'un dispositif de sécurisation selon l'invention, destiné à l'authentification de plaques d'immatriculation pour les automobiles. Cet exemple a pour objet d'illustrer et de mieux faire comprendre l'invention mais ne saurait en limiter la portée.

On prépare d'une part un premier complexe A de film adhésif sensible à la pression en enduisant une masse acrylique en phase solvant de référence 180.1753 de MONSANTO, sur une feuille de protecteur en papier siliconé 6 de type HL120 de FLEXEUROP. L'enduction est faite de façon à obtenir environ 70 g de masse adhésive par mètre carré. On couche ensuite côté adhésif un film destructible 4 en polystyrène de type OPTICITE-540 de la société DOW, d'épaisseur environ 66 µm dans laquelle on effectue des prédécoupes en forme de croix formée de deux lignes de 20 mm à angle droit.

On prépare d'autre part un second complexe B formé d'un film en PVDF d'une épaisseur de 50 µm (d'origine ATOCHEM) sur lequel on enduit une masse acrylique en phase solvant de référence polytex 2301 de AV Chemie, de façon à obtenir environ 60 g de masse adhésive par mètre carré.

On fixe ensuite sur la face visible du film destructible 4 du complexe A au dessus des prédécoupes un hologramme 2D.3D de forme circulaire, d'un diamètre de 30 mm et qui peut être fixé soit au moyen d'un transfert thermique, soit au moyen d'un adhésif sensible à la pression. On imprime simultanément à proximité de l'hologramme, sur le film destructible, le code d'identification figurant sur la carte grise délivrée par la préfecture. L'impression est faite au moyen d'une imprimante à jet d'encre par exemple.

On dépose, à l'aide d'une micropompe automatique, des points de colle cyanoacrylate, par exemple aux points (8) de la figure 2, sur l'hologramme et sur le film destructible.

L'ensemble est ensuite recouvert à l'aide du complexe B qui est auto-adhésif et la bonne cohésion des différentes couches est assurée par un passage entre deux rouleaux presseurs. On effectue ensuite la découpe pour obtenir des rectangles à coins arrondis de 5 cm de longueur et 4,5 cm de largeur.

Des dispositifs selon l'exemple décrit ci-dessus ont été collés sur une plaque d'aluminium d'un type généralement utilisé pour fabriquer des plaques d'immatriculation d'automobile 11 : les tentatives de décollement du dispositif ont toutes abouti à une destruction au moins partielle du dispositif, le rendant totalement inapte à une seconde utilisation.

De façon pratique, dans le cas de la sécurisation des automobiles, chaque carte grise est délivrée par la préfecture avec deux dispositifs selon l'invention, portant chacun un hologramme et le code d'identification.

Ces dispositifs sont ensuite fixés, sur les plaques d'immatriculation 11 du véhicule si nécessaire en effectuant par chauffage l'activation de l'adhésif. De préférence, le dispositif sera fixé directement sur le métal de la plaque d'immatriculation et dans une cavité formée par emboutissage et de dimension exactement adaptée au dispositif.

Ainsi, les plaques peuvent être identifiées comme étant authentiques dès lors qu'elles sont munies d'un dispositif de sécurisation en bon état.

Le choix des différents constituants du dispositif fait que toute tentative de décollement dudit dispositif se traduit par une destruction du support et de l'hologramme 3, et rend sa réutilisation totalement impossible. L'absence de ce dispositif rend donc impossible la fabrication de plaques d'immatriculation 11 qui ne seraient pas en concordance avec les documents délivrés de façon réglementaire par l'administration.

L'exemple ci-dessus est décrit pour la sécurisation de l'immatriculation des véhicules, mais il est possible également d'authentifier de façon semblable tout objet plus ou moins volumineux dont on souhaite garantir l'origine ou la propriété. Dans le domaine des automobiles, il est ainsi possible de sécuriser la plaque constructeur des véhicules en utilisant par exemple un hologramme personnalisé avec l'emblème du constructeur ou tout autre signe distinctif réalisé à l'aide de caractères sécuritaires.

## Revendications

1. Dispositif notamment ayant la forme d'une étiquette auto-adhésive (10), du type comprenant au moins un élément à caractère sécuritaire tel qu'un hologramme (3) qui est disposé entre un film transparent (1) et une couche d'adhésif pour la fixation dudit dispositif sur un objet à sécuriser, caractérisé en ce qu'il comprend en outre une autre couche d'adhésif (2) reliant ledit élément sécuritaire (3) audit film transparent (1), et au moins un film destructible (4) qui est disposé sur ledit élément sécuritaire (3) par une de ses faces et dont l'autre face est recouverte par ladite couche d'adhésif de fixation et qui est à fort pouvoir adhésif.

2. Dispositif selon la revendication 1, caractérisé en ce que sur au moins la face visible (4a) du film destructible (4) est apposé, par exemple par impression, un code, un numéro ou un sigle (7), de préférence à proximité de l'élément à caractère sécuritaire (3).

3. Dispositif selon la revendication 2, caractérisé en ce que le code, numéro ou sigle (7), recouvre partiellement l'élément à caractère sécuritaire (3).

4. Dispositif selon la revendication 1 caractérisé en ce que l'on effectue des scellements ponctuels entre l'élément à caractère sécuritaire et le film transparent au moyen de points de colle cyanoacrylate.

5. Dispositif selon la revendication 1 en ce que l'adhésif à fort pouvoir adhésif (5) est du type thermoactivable.

6. Dispositif selon la revendication 1, caractérisé en ce que le film destructible (4) comporte des caractères lisibles à l'aide d'un rayonnement infrarouge ou ultraviolet.

7. Dispositif selon la revendication 1, caractérisé en ce qu'il se présente sous la forme d'une étiquette auto-adhésive (10).

8. Application du dispositif selon l'une des revendications 1 à 7 à l'authentification des plaques d'immatriculation (11) ou des plaques constructeur des véhicules automobiles.

9. Application du dispositif selon l'une des revendications 1 à 7 à l'authentification des plaques d'immatriculation des véhicules automobiles, lesdites plaques étant embouties de façon à former une cavité de dimensions égales à celles du dispositif.
